# EUROPEAN PATENT APPLICATION

(11) **EP 4 837 425 A1**
(43) Date of publication of application: **11.11.2026**
(21) Application number: 24926111.6
(22) Date of filing: 07.03.2024
(51) Int. Cl.: A23F 5/24, A23F 5/06

(54) **METHOD FOR EXTRACTING COFFEE BY ADJUSTING INPUT TIME BY SIZE OF GROUND COFFEE BEAN PARTICLES**

(30) Priority: 21.02.2024 KR 20240024853
(71) Applicant: Kim, Young Ki, Jeju-si, Jeju-do 63077 (KR)
(72) Inventor: Kim, Young Ki, Jeju-si, Jeju-do 63077 (KR)
(74) Representative: Cabinet Chaillot
(86) International application number: PCT/KR2024/002930
(87) International publication number: WO 2025/178160

(57) **Abstract**

The present invention relates to a method of extracting coffee by adjusting feeding times according to the particle size of ground coffee beans, including: grinding coffee beans using a grinder; classifying and separating the ground coffee beans into a plurality of ranges by particle size using a particle separator; and extracting coffee by feeding the ground coffee beans of each range into an extractor at specific times. According to the present invention, by dividing ground coffee beans into multiple particle size ranges using a particle separation device, measuring appropriate times at which an undesirable flavor is not extracted, and feeding the ground coffee beans at the appropriate times before final extraction, only a desirable flavor is extracted from the ground coffee beans of each range, and by setting points before an undesirable flavor is extracted, which vary according to a type of coffee beans, a degree of roasting (roasting point), an extraction temperature, and the like, as optimal feeding times, a superior coffee extract is obtained.

## Description

### [Technical Field]

The present invention relates to a method of extracting coffee by adjusting feeding times according to the particle size of ground coffee beans, in which ground coffee beans are divided into multiple particle size ranges using a particle separation device, appropriate times at which an undesirable flavor is not extracted are measured, and the ground coffee beans are fed at the appropriate times before final extraction, thereby allowing only a desirable flavor to be extracted from the ground coffee beans of each range.

### [Background Art]

Generally, factors affecting the flavor during coffee extraction include coffee quality, a degree of roasting (roasting point), the particle size of ground coffee beans, an extraction temperature, an extraction time, an extraction method, the proficiency of the barista, and the like.

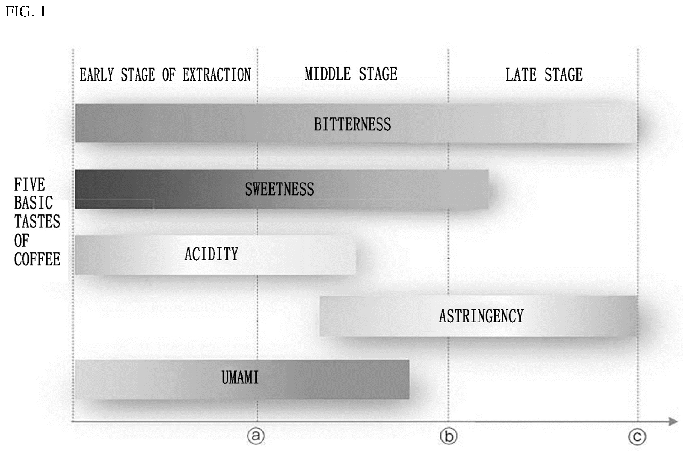

As shown in FIG. 1, coffee flavor components extracted as coffee extraction progresses emerge in the order of acidity, sweetness, bitterness, astringency, and the like, and in a case where the particle size of ground coffee beans is small, the extraction rate is high, and thus, before flavor and aroma are extracted from larger ground coffee bean particles, bitterness, astringency, and the like first extracted from smaller ground coffee bean particles negatively affect the final extract.

For these reasons, many studies are being conducted on methods for extracting coffee with excellent flavor and aroma, and as a related prior art, Korean Patent Registration No. 10-2385680, titled "method of sequentially extracting separate drip coffee and coffee undiluted solution," has been disclosed. The method includes: a muffin formation step of supplying 30 parts by weight to 40 parts by weight of water to 100 parts by weight of ground coffee beans; a pause step of not supplying the water for 28 seconds to 32 seconds; a first additional reaction step of further supplying 10 parts by weight to 14 parts by weight of the water and then not supplying the water for 18 seconds to 22 seconds; a second additional reaction step of further supplying 10 parts by weight to 14 parts by weight of the water and then not supplying the water for 18 seconds to 22 seconds; a third additional reaction step of further supplying 10 parts by weight to 14 parts by weight of the water and then not supplying the water for 18 seconds to 22 seconds; a fourth additional reaction step of further supplying 10 parts by weight to 14 parts by weight of the water and then not supplying the water for 18 seconds to 22 seconds; a fifth additional reaction step of further supplying 10 parts by weight to 20 parts by weight of the water and then not supplying the water for 18 seconds to 22 seconds; and an extraction step of extracting coffee by additionally supplying the water, the extraction step further includes: a first extraction step of receiving a primary undiluted solution in a first server by supplying 38 parts by weight to 42 parts by weight of the water for 55 seconds to 65 seconds; and a second extraction step of receiving a secondary undiluted solution in a second server by supplying 48 parts by weight to 55 parts by weight of the water for 55 seconds to 65 seconds, the coffee beans include Arabica coffee beans roasted at 195 °C to 200 °C, and the extraction step further includes a third extraction step of receiving a tertiary undiluted solution in a third server by supplying 20 parts by weight to 60 parts by weight of the water for 3 seconds to 90 seconds.

However, the prior art has a limitation in that it overlooks the fact that the uniformity of the particle size of ground coffee beans must be excellent to improve flavor and aroma during coffee extraction. For this reason, high-end specialty coffee shops use expensive coffee grinders with high uniformity of particle size, but despite the use of such expensive grinders, it is a technical limitation of grinders that ground coffee beans inevitably include ground particles of various sizes. Therefore, in a case where, to overcome these limitations**,** extraction is terminated before an undesirable flavor is extracted first from **s**maller coffee bean particles in an extraction process of ground coffee beans, there is a problem that the extraction ends before extraction of a desirable flavor from larger coffee bean particles is completed, and in a case where, to overcome these limitations, extraction is terminated after waiting until a desirable flavor is extracted from larger coffee bean particles, there is a problem that an undesirable flavor from smaller coffee bean particles is inevitably included in the extract.

### [Disclosure]

### [Technical Problem]

To address the above problems of the prior art, the present invention is directed to allowing only a desirable flavor to be extracted from the ground coffee beans of each range by dividing ground coffee beans into multiple particle size ranges using a particle separation device, measuring appropriate times at which an undesirable flavor is not extracted, and feeding the ground coffee beans at the appropriate times before final extraction.

The present invention is also directed to obtaining a superior coffee extract by setting points before an undesirable flavor is extracted, which vary according to a type of coffee beans, a degree of roasting (roasting point), an extraction temperature, and the like, as optimal feeding times.

### [Technical Solution]

To achieve the above objectives, according to one aspect of the present invention, there is provided a method of extracting coffee by adjusting feeding times according to a particle size of ground coffee beans, the method including: grinding coffee beans using a grinder; classifying and separating the ground coffee beans into a plurality of ranges by particle size using a particle separator; and extracting coffee by feeding the ground coffee beans of each range into an extractor at specific times.

In the extracting of the coffee, the coffee may be extracted by separately feeding the ground coffee beans corresponding to all ranges among the ranges into the extractor, or the coffee may be extracted by separately feeding the ground coffee beans corresponding to some ranges consisting of more than one of the ranges into the extractor.

In the extracting of the coffee, the coffee may be extracted by feeding the ground coffee beans of more than one of the ranges that are combined with each other into the extractor, feeding the ground coffee beans of a range that are divided into portions into the extractor, or feeding only some of the ground coffee beans of a range into the extractor.

In the extracting of the coffee, the coffee may be extracted from the ground coffee beans of each range that are packaged into drip bags or capsules.

The extracting of the coffee may include: measuring times during which an undesirable flavor is not extracted, while extracting the ground particles of each range with the same amount of water; determining a maximum time among the times during which an undesirable flavor is not extracted from the ground particles of each range as a total extraction time; and feeding the ground particles of each range into the extractor after a time that is obtained by subtracting the time of each range during which an undesirable flavor is not extracted from the total extraction time based on an extraction start point.

In the measuring of the times during which an undesirable flavor is not extracted, the undesirable flavor may be a dry taste, an astringent taste, and a bitter taste discriminated by a tester.

In the measuring of the times during which an undesirable flavor is not extracted, the ground particles of each range may be uniformly extracted in specific amounts in units of minutes according to a set extraction method, a flavor and a body may be inspected, and in a minute-unit time slot when the undesirable flavor starts to be extracted, the ground particles of each range may be re-extracted at intervals of 5 to 20 seconds, the flavor and the body may be re-inspected to obtain times at which the undesirable flavor starts to be extracted, and times before the obtained times may be set as the times during which an undesirable flavor is not extracted.

According to another aspect of the present invention, there is provided a method of extracting coffee by adjusting feeding times according to a particle size of ground coffee beans, the method including: grinding coffee beans using a grinder; classifying and separating the ground coffee beans into a plurality of ranges by particle size using a particle separator; separately extracting coffee independently from the ground coffee beans of each range using an extractor; and mixing the separately extracted coffee.

In the separate extracting of the coffee, the coffee may be separately extracted independently from the ground coffee beans corresponding to all ranges among the ranges using the extractor, or the coffee may be separately extracted independently from the ground coffee beans corresponding to some ranges consisting of more than one of the ranges using the extractor.

In the separate extracting of the coffee, the coffee may be separately extracted using the extractor after the ground coffee beans of more than one of the ranges are combined with each other, the coffee may be separately extracted using the extractor after the ground coffee beans of a range are divided into portions, or the coffee may be separately extracted from only some of the ground coffee beans of a range using the extractor.

In the separate extracting of the coffee, the coffee may be separately extracted from the ground coffee beans of each range that are packaged into drip bags or capsules.

In the separate extracting of the coffee, when separately extracting the coffee independently from the ground coffee beans of each range using the extractor, the extracting may be performed for times during which an undesirable flavor is not extracted.

In the separate extracting of the coffee, the undesirable flavor may be a dry taste, an astringent taste, and a bitter taste discriminated by a tester.

### [Advantageous Effects]

According to a method of extracting coffee by adjusting feeding times according to the particle size of ground coffee beans according to the present invention, by dividing ground coffee beans into multiple particle size ranges using a particle separation device, measuring appropriate times at which an undesirable flavor is not extracted, and feeding the ground coffee beans at the appropriate times before final extraction, only a desirable flavor can be extracted from the ground coffee beans of each range, and by setting points before an undesirable flavor is extracted, which vary according to a type of coffee beans, a degree of roasting (roasting point), an extraction temperature, and the like, as optimal feeding times, a superior coffee extract can be obtained.

### [Description of Drawings]

FIG. 1 is a graph showing the emergence of the five basic tastes of coffee according to coffee extraction time in the prior art.
FIG. 2 is a flowchart illustrating a method of extracting coffee by adjusting feeding time by particle size of ground coffee beans according to a first embodiment of the present invention.
FIG. 3 is a flowchart illustrating a method of extracting coffee by adjusting feeding times according to the particle size of ground coffee beans according to a second embodiment of the present invention.
FIG. 4 shows test results for undesirable flavor in the method of extracting coffee by adjusting feeding times according to the particle size of ground coffee beans according to the present invention.

### [Modes of the Invention]

Since the present invention may have various embodiments by being modified in various ways, specific embodiments illustrated in the drawings will be described by way of example. Also, the present invention is not limited to the specific embodiments, and should be understood to include all modifications, equivalents, and substitutes included in the technical spirit of the present invention.

Hereinafter, embodiments according to the present invention will be described in detail with reference to the accompanying drawings, the same reference numerals will be assigned to the same or corresponding components throughout the drawings, and redundant descriptions thereof will be omitted.

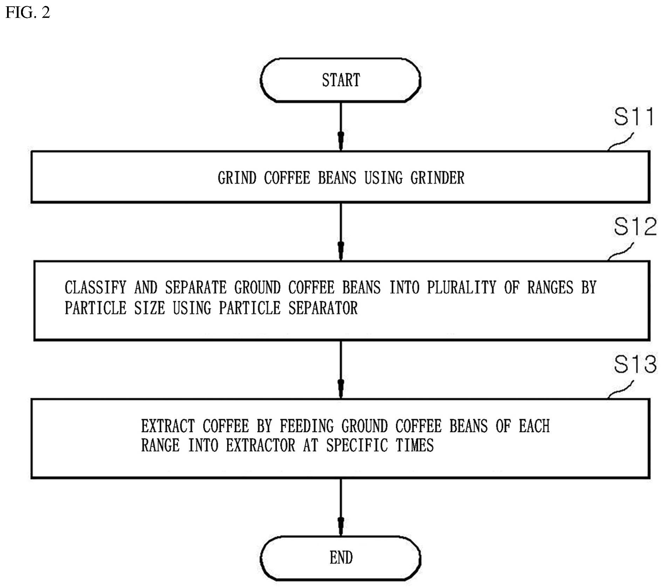

FIG. 2 is a flowchart illustrating a method of extracting coffee by adjusting feeding times according to the particle size of ground coffee beans according to a first embodiment of the present invention.

Referring to FIG. 2, in a method of extracting coffee by adjusting feeding times according to the particle size of ground coffee beans according to one embodiment of the present invention, first, coffee beans are ground using a grinder (S11). The grinder used herein is an electric grinder, but the present invention is not limited thereto, and a manual grinder may be used.

After grinding of the coffee beans is completed, the ground coffee beans are classified and separated into a plurality of ranges by particle size using a particle separator (S12). The particle separator may be a separator using a mesh in one example, may be a cyclone separator using an air stream in another example, or may be various other physical or mechanical particle size separation devices. Particle sizes for each range in relation thereto may be set as shown in Table 1 below, but this is merely one example, and a user may set ranges by selecting various particle sizes as boundaries, and the number of ranges may also be arbitrarily set by the user. Such a distribution of particle sizes may vary depending on a grind size setting when grinding with a grinder.

**[Table 1]**

| Classification | First range | Second range | Third range | Fourth range | Fifth range |
|---|---|---|---|---|---|
| Particle size | Greater than 1,000 µm | 800 to 1,000 µm | 400 to 800 µm | 300 to 400 µm | Less than 300 µm |

After separating of the ground coffee beans into the plurality of ranges by particle size is completed, coffee is extracted by feeding the ground coffee beans of each range into an extractor at specific times (S13). Here, coffee may be extracted by separately feeding the ground coffee beans corresponding to all ranges among the particle size ranges into the extractor, or unlike this, coffee may be extracted by separately feeding the ground coffee beans corresponding to some ranges consisting of more than one of the particle size ranges into the extractor.

In the extracting of the coffee (S13), coffee may be extracted by feeding the ground coffee beans of more than one of the ranges that are combined with each other into the extractor, feeding the ground coffee beans of a range that are divided into portions into the extractor, or feeding only some of the ground coffee beans of a range into the extractor. Also, coffee may be extracted from the ground coffee beans of each range that are packaged into drip bags or capsules.

The extracting of the coffee (S13) may include measuring times during which an undesirable flavor is not extracted while extracting the ground particles of each range with the same amount of water, determining a maximum time among the times during which an undesirable flavor is not extracted from the ground particles of each range as a total extraction time; and feeding the ground particles of each range into the extractor after a time that is obtained by subtracting the time of each range during which an undesirable flavor is not extracted from the total extraction time based on an extraction start point.

In the measuring of the times during which an undesirable flavor is not extracted, the undesirable flavor may be a dry taste, an astringent taste, and a bitter taste discriminated by a tester.

In the measuring of the times during which an undesirable flavor is not extracted, the ground particles of each range may be uniformly extracted in specific amounts, for example, 5 g, in units of minutes according to a set extraction method, a flavor and a body may be inspected, in a minute-unit time slot when the undesirable flavor starts to be extracted, the ground particles of each range may be re-extracted at intervals of 5 to 20 seconds, for example, 10 seconds, the flavor and the body may be re-inspected to obtain times at which the undesirable flavor starts to be extracted, and times before the obtained times may be set as the times during which an undesirable flavor is not extracted. Here, various extraction methods such as drip brewing and French press extraction may be used as the extraction method.

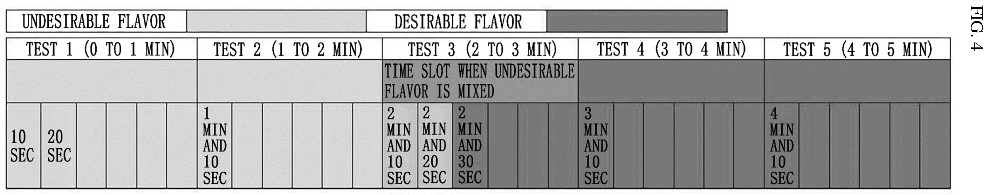

The flavor or body cannot be quantified as it is in a sensory domain, more than 800 components are currently known to exist in a coffee extract, and preferences for flavor or body may vary according to personal taste, however a tester at or above a certain level can secure a certain degree of objectivity in flavor discrimination for coffee. Also, in a case where the same person performs the same extraction using the same coffee beans, the same results can be produced since the tester is the same, and test results for undesirable flavor are shown in FIG. 4 as an example. Furthermore, the tester may be a holder of a certification related to coffee discrimination, and in the United States, there is an association called the Specialty Coffee Association of America (SCAA), which grants certifications such as Q-grader or cupper to those who taste and evaluate the flavor and the like of coffee beans.

As a first example of the present invention, as shown in Table 2 below, times during which an undesirable flavor is not extracted can be obtained for the first to fifth ranges of Table 1 above, and this is merely one example. Here, the time during which an undesirable flavor is not extracted may be a maximum time during which an undesirable flavor is not extracted, a time right before an undesirable flavor is extracted, or the like, when extraction of ground coffee beans corresponding to any range is performed.

**[Table 2]**

| Classification | First range | Second range | Third range | Fourth range | Fifth range |
|---|---|---|---|---|---|
| Extraction time | 3 min and 30 sec | 3 min | 2 min and 20 sec | 1 min | 30 sec |

According to the above, the total extraction time is 3 minutes and 30 seconds, and a feeding time of ground coffee beans of each range is obtained by "total extraction time - extraction time of each range," which is shown in Table 3 below.

**[Table 3]**

| Classification | First range | Second range | Third range | Fourth range | Fifth range |
|---|---|---|---|---|---|
| Feeding time | At start | After 30 sec | After 1 min and 10 sec | After 2 min and 30 sec | After 3 min |

As a second example, in a modified feeding method in which not all ground coffee beans are fed, a total of 20 g of coffee beans are ground and separated into each range, and weights of the ground coffee bean in each range are as shown in Table 4 below.

**[Table 4]**

| Classification | First range | Second range | Third range | Fourth range | Fifth range |
|---|---|---|---|---|---|
| Weight (g) | 0.5 | 3 | 12 | 4 | 0.5 |

In this case, when excluding the ground products of certain ranges, since the amounts of ground products separated into the first range and the fifth range are very small, extraction may be performed while excluding the first range or the fifth range, or both the first and fifth ranges, in order to reduce the extraction time or simplify the extraction process. In addition, in the case of extraction methods where ground coffee beans cannot be fed during extraction, such as in the case of Moka pot extraction, certain ranges may be excluded before feeding.

As a third example, in cases where the ground coffee beans of several ranges are combined and fed, the ground coffee beans of the first range and the fifth range may be combined with the ground coffee beans of an upper range or a lower range and fed when it is determined that separately feeding the ground coffee beans of the first range and the fifth range, whose amounts are small, may make the extraction process difficult, and it is determined that, due to the small amounts, feeding in combination will not significantly affect the flavor.

As a fourth example, in cases where the ground coffee beans of the same range are divided into portions and fed, since the flavor extracted first in coffee extraction is acidity, coffee with a strong acidic taste can be extracted by dividing the ground products of the third range into portions and feeding some of the portions later than the measured scheduled feeding time of the third range.

As a fifth example, in cases where the ground coffee beans are fed after changing the measured scheduled feeding times or changing the feeding order, the ground coffee beans may be fed earlier or later than the measured scheduled feeding times to change the flavor of the extract.

As a sixth example, in cases where the ground coffee beans separated into each range are fed in certain amounts at a time instead of being fed all at once, while in most extractions, a total feeding amount is set for feeding, since there may be a difference between the amount ground and the amount of ground coffee beans actually produced, the feeding amount of each range may be adjusted for feeding, or when performing several extractions with a large amount of ground products, the feeding amount of each range may be adjusted for feeding.

As a seventh example, in cases where the final extract is produced by feeding the ground coffee beans by particle size into a drip bag or a coffee maker, the ground coffee beans may be classified by particle size and extracted by adjusting the feeding times thereof and separately providing the ground coffee beans classified by particle size, and here, in the case of a capsule coffee maker, a plurality of capsules containing ground coffee beans of different particle sizes may be additionally mounted to allow the ground coffee beans to be sequentially extracted.

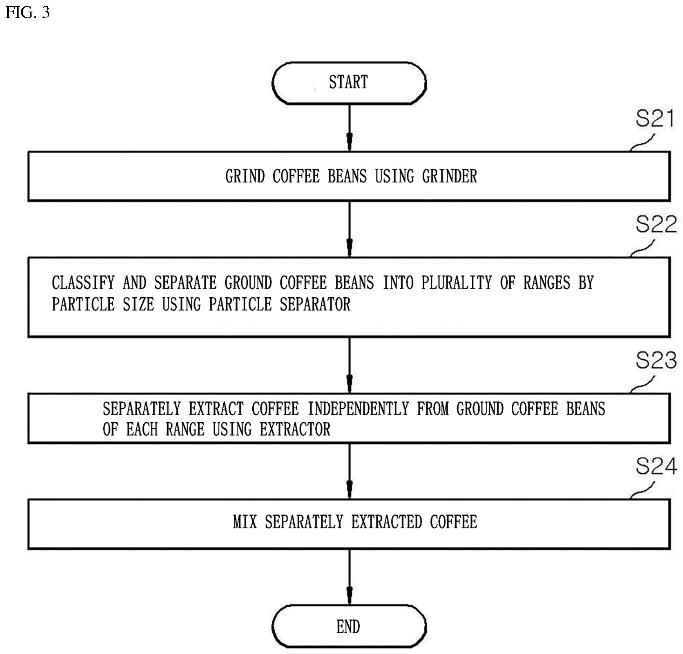

FIG. 3 is a flowchart illustrating a method of extracting coffee by adjusting feeding times according to the particle size of ground coffee beans according to a second embodiment of the present invention.

Referring to FIG. 3, in a method of extracting coffee by adjusting feeding times according to the particle size of ground coffee beans according to the second embodiment of the present invention, first, coffee beans are ground using a grinder (S21).

After grinding of the coffee beans is completed, the ground coffee beans are classified and separated into a plurality of ranges by particle size using a particle separator (S22).

After separating of the ground coffee beans is completed, coffee is separately extracted independently from the ground coffee beans of each range using an extractor (S23).

In the separate extracting of the coffee (S23), in one example, coffee may be separately extracted independently from the ground coffee beans corresponding to all ranges among the ranges using the extractor, and in another example, coffee may be separately extracted independently from the ground coffee beans corresponding to some ranges consisting of more than one of the ranges using the extractor. Also, coffee may be separately extracted using the extractor after the ground coffee beans of more than one of the ranges are combined with each other, coffee may be separately extracted using the extractor after the ground coffee beans of a range are divided into portions, or coffee may be separately extracted from only some of the ground coffee beans of a range using the extractor. Also, coffee may be separately extracted from the ground coffee beans of each range that are packaged into drip bags or capsules.

In the separate extracting of the coffee (S23), when separately extracting coffee independently from the ground coffee beans of each range using the extractor, the extracting may be performed for times during which an undesirable flavor is not extracted. Here, the undesirable flavor may be a dry taste, an astringent taste, and a bitter taste discriminated by a tester, and since detailed description thereof has been given above in relation to the method of extracting coffee by adjusting feeding times according to the particle size of ground coffee beans according to the first embodiment of the present invention, overlapping description will be omitted.

After the coffee is separately extracted, the separately extracted coffee is mixed (S24).

As an eighth example, in the case of a method in which the final extract is produced by mixing the coffee separately extracted from the ground coffee beans of each range, by producing the final extract by separately extracting coffee from the ground coffee beans of each range and mixing all or some of the coffee, the flavor or body similar to the flavor or body in the previous examples can be obtained. This may be applied to cases where a large amount of coffee is extracted.

According to a method of extracting coffee by adjusting feeding times according to the particle size of ground coffee beans according to the present invention, by dividing ground coffee beans into multiple particle size ranges using a particle separation device, measuring appropriate times at which an undesirable flavor is not extracted, and feeding the ground coffee beans at the appropriate times before final extraction, only a desirable flavor can be extracted from the ground coffee beans of each range, and by setting points before an undesirable flavor is extracted, which vary according to a type of coffee beans, a degree of roasting (roasting point), an extraction temperature, and the like, as optimal feeding times, a superior coffee extract can be obtained.

The present invention has been described above with reference to the accompanying drawings, but various modifications may be made without departing from the technical spirit of the present invention. Therefore, the scope of the present invention should not be defined as being limited to the above-described embodiments, and should be defined by the claims and their equivalents.

## Claims

1. A method of extracting coffee by adjusting feeding times according to a particle size of ground coffee beans, the method comprising:
grinding coffee beans using a grinder;
classifying and separating the ground coffee beans into a plurality of ranges by particle size using a particle separator; and
extracting coffee by feeding the ground coffee beans of each range into an extractor at specific times.

2. The method of claim 1, wherein, in the extracting of the coffee, the coffee is extracted by separately feeding the ground coffee beans corresponding to all ranges among the ranges into the extractor, or the coffee is extracted by separately feeding the ground coffee beans corresponding to some ranges consisting of more than one of the ranges into the extractor.

3. The method of claim 1, wherein, in the extracting of the coffee, the coffee is extracted by feeding the ground coffee beans of more than one of the ranges that are combined with each other into the extractor, feeding the ground coffee beans of a range that are divided into portions into the extractor, or feeding only some of the ground coffee beans of a range into the extractor.

4. The method of claim 1, wherein, in the extracting of the coffee, the coffee is extracted from the ground coffee beans of each range that are packaged into drip bags or capsules.

5. The method of any one of claims 1 to 4, wherein the extracting of the coffee includes:
measuring times during which an undesirable flavor is not extracted, while extracting the ground particles of each range with the same amount of water;
determining a maximum time among the times during which an undesirable flavor is not extracted from the ground particles of each range as a total extraction time; and
feeding the ground particles of each range into the extractor after a time that is obtained by subtracting the time of each range during which an undesirable flavor is not extracted from the total extraction time based on an extraction start point.

6. The method of claim 5, wherein, in the measuring of the times during which an undesirable flavor is not extracted, the undesirable flavor is a dry taste, an astringent taste, and a bitter taste discriminated by a tester.

7. The method of claim 5, wherein, in the measuring of the times during which an undesirable flavor is not extracted, the ground particles of each range are uniformly extracted in specific amounts in units of minutes according to a set extraction method, a flavor and a body are inspected, in a minute-unit time slot when the undesirable flavor starts to be extracted, the ground particles of each range are re-extracted at intervals of 5 to 20 seconds, the flavor and the body are re-inspected to obtain times at which the undesirable flavor starts to be extracted, and times before the obtained times are set as the times during which an undesirable flavor is not extracted.

8. A method of extracting coffee by adjusting feeding times according to a particle size of ground coffee beans, the method comprising:
grinding coffee beans using a grinder;
classifying and separating the ground coffee beans into a plurality of ranges by particle size using a particle separator;
separately extracting coffee independently from the ground coffee beans of each range using an extractor; and
mixing the separately extracted coffee.

9. The method of claim 8, wherein, in the separate extracting of the coffee, the coffee is separately extracted independently from the ground coffee beans corresponding to all ranges among the ranges using the extractor, or the coffee is separately extracted independently from the ground coffee beans corresponding to some ranges consisting of more than one of the ranges using the extractor.

10. The method of claim 8, wherein, in the separate extracting of the coffee, the coffee is separately extracted using the extractor after the ground coffee beans of more than one of the ranges are combined with each other, the coffee is separately extracted using the extractor after the ground coffee beans of a range are divided into portions, or the coffee is separately extracted from only some of the ground coffee beans of a range using the extractor.

11. The method of claim 8, wherein, in the separate extracting of the coffee, the coffee is separately extracted from the ground coffee beans of each range that are packaged into drip bags or capsules.

12. The method of any one of claims 8 to 11, wherein in the separate extracting of the coffee, when separately extracting the coffee independently from the ground coffee beans of each range using the extractor, the extracting is performed for times during which an undesirable flavor is not extracted.

13. The method of claim 12, wherein, in the separate extracting of the coffee, the undesirable flavor is a dry taste, an astringent taste, and a bitter taste discriminated by a tester.
